# EUROPÄISCHE PATENTSCHRIFT

(11) **EP 1 420 425 B1**
(45) Veröffentlichungstag und Bekanntmachung des Hinweises auf die Patenterteilung: **05.03.2008**
(21) Anmeldenummer: 03022341.6
(22) Anmeldetag: 04.10.2003
(51) Int. Cl.: H01H 25/04, B60Q 1/14

(54) **Lenkstockschalter**
Steering column stalk switch
Commutateur de colonne de direction

(30) Priorität: 12.11.2002 DE 10252379
(43) Veröffentlichungstag der Anmeldung: 19.05.2004
(73) Patentinhaber: Valeo Schalter und Sensoren GmbH, 74321 Bietigheim-Bissingen (DE)
(72) Erfinder: Bosch, Jürgen, 86757 Wallerstein (DE); Brunner, Erhard, 86720 Nördlingen-Löpsingen (DE); Kleinle, Martin, 86709 Wolferstadt (DE); Simonis, Karl, 75428 Illingen (DE); Lipfert, Rainer, 74076 Heilbronn (DE)
(74) Vertreter: Bulling, Alexander

(56) Entgegenhaltungen:
- EP-A- 0 887 230
- FR-A- 2 747 834
- GB-A- 2 152 289
- US-A- 5 440 085
- US-A- 5 742 014

## Beschreibung

Die Erfindung betrifft einen Lenkstockschalter für ein Fahrzeug, mit einer Schalteinheit, deren in zwei quer, insbesondere etwa senkrecht zueinander verlaufenden Schwenkebenen schwenkbar gelagerter Schalthebel mit Schaltkontakte aufweisenden Schaltgliedern derart gekoppelt ist, dass die Schaltkontakte je nach Arbeitstellung des Schalthebels Anschlusskontakte eines eben ausgebildeten Leiterbahnenträgers beaufschlagen.

Ein derartiger Lenkstockschalter ist beispielsweise aus der FR 2747834 A1 bekannt geworden. Bei diesem Stand der Technik wird ein Schaltglied je nach Arbeitstellung des Schalthebels auf dem Leiterbahnenträger in eine entsprechende Schaltstellung verschoben. Wird der Schalthebel um eine senkrecht zum Leiterbahnenträger verlaufende Achse geschwenkt, so wird das Schaltglied ebenfalls um diese Achse gegenüber dem Leiterbahnenträger verschwenkt. Wird hingegen das Schaltglied um eine parallel zum Leiterbahnenträger verlaufende Achse verschwenkt, so wird das Schaltglied über einen Umlenkmechanismus entlang einer geraden Linie über den Leiterbahnenträger geführt.

Ein derartiger Stand der Technik hat den Nachteil, dass relativ viel Bauraum beansprucht wird. Insbesondere ist eine relativ große Oberfläche des Leiterbahnenträgers zur Verfügung zu stellen, damit die Schaltkontakte des Schaltgliedes in allen Arbeitstellungen des Schalthebels die entsprechenden Anschlusskontakte des Leiterbahnenträgers kontaktieren können.

Aus der DE 199 58 507 A1 ist ein anderer Lenkstockschalter bekannt geworden, bei dem zwei rechtwinklig zueinander angeordnete, eben ausgebildete, Leiterbahnenträger vorgesehen sind. Beim Schwenken des Schalthebels in der einen Schwenkebene kontaktiert hierbei ein Schaltglied die Anschlusskontakte des einen Leiterbahnenträgers, und beim Schwenken des Schalthebels in der anderen Schwenkebene werden die Anschlusskontakte des anderen Leiterbahnenträgers beaufschlagt. Durch die Verwendung von zwei rechtwinklig zueinander angeordneten Leiterbahnenträger ist zusätzlicher Bauraum und sind zusätzliche Bauteile erforderlich.

Aus der US 5,742,014 ist ein Lenkstockschalter gemäß dem Oberbegriff des Anspruchs 1 bekannt geworden.

Der vorliegenden Erfindung liegt die Aufgabe zugrunde, einen derart bekannten Lenkstockschalterdahingehend weiterzubilden, dass insbesondere Bauraum eingespart wird. Dabei sollen die für die jeweilige Schalteinheit relevanten Abmessungen des Leiterbahnenträgers verringert werden.

Diese Aufgabe wird mit einem Lenkstockschalter mit den Merkmalen des Anspruchs 1 gelöst. Dies hat den Vorteil, dass nicht nur lediglich eine Seite des Leiterbahnenträgers für die Kontaktierung der Schaltkontakte der Schaltglieder Verwendung findet, sondern dass sowohl die Oberseite als auch die Unterseite des Leiterbahnenträgers Anschlusskontakte für die Schaltkontakte der Schaltglieder aufweist. Hierdurch kann insbesondere der für die entsprechende Schalteinheit relevante Bereich des Leiterbahnenträgers in seinen Abmessungen wesentlich verkleinert werden. Ein derartiger Lenkstockschalter baut folglich kompakter.

Der Leiterbahnenträger mit Anschlusskontakten kann hierbei als Leiterplatte, Leiterfolie, Stanzgitter oder dergleichen ausgebildet sein. Je nach Art des Lenkstockschalters kann vorgesehen sein, dass der Leiterbahnenträger weitgehend senkrecht zur Lenkstockachse verläuft.

Dabei können die für ein Bewegen des Schalthebels in der einen Schwenkebene liegenden relevanten Anschlusskontakte auf der Oberseite beziehungsweise Unterseite des Leiterbahnenträgers liegen und wenn die für ein Bewegen des Schalthebels in der anderen Schwenkebene relevanten Anschlusskontakte auf der Unterseite beziehungsweise Oberseite des Leiterbahnenträgers liegen. Dabei ist vorteilhaft, wenn die Anschlusskontakte, die bei einem Schwenken des Betätigungshebels parallel zum Leiterbahnenträger beaufschlagt werden, auf der Oberseite, das heißt auf der dem Schalthebel zugewandten Seite des Leiterbahnenträgers liegen und wenn die Anschlusskontakte, die dann beaufschlagt werden, wenn der Schalthebel senkrecht zum Leiterbahnenträger verschenkt wird, auf der Unterseite des Leiterbahnenträgers liegen.

Erfindungsgemäß ist vorgesehen, dass auf dem Leiterbahnenträger ein um ein senkrecht zum Leiterbahnenträger verlaufende Drehachse angeordnetes Drehschaltglied vorgesehen ist, das durch Bewegen des Schalthebels in der einen Schwenkebene betätigt wird. Das Drehschaltglied ist vorteilhafterweise mit dem Schalthebel drehfest verbunden.

Außerdem ist ein als Schiebeschaltglied ausgebildetes Schaltglied vorgesehen, das über einen Umlenkmechanismus mit dem Schalthebel derart gekoppelt ist, dass durch Bewegen des Schalthebels in der anderen Schwenkebene, die insbesondere senkrecht zum Leiterbahnenträger verläuft, das Schiebeelement entlang einer Linie verschiebbar an dem Leiterbahnenträger angeordnet ist. Das Schiebeelement ist hierbei vorteilhafterweise auf der Unterseite des Leiterbahnenträgers, also auf der dem Schalthebel abgewandten Seite des Leiterbahnenträgers, angeordnet.

Ein vorteilhafter Lenkstockschalter ergibt sich folglich dann, wenn auf der Oberseite des Leiterbahnenträgers ein Drehschaltglied und auf der Unterseite des Leiterbahnenträgers das Schiebeschaltglied vorgesehen ist. Je nach Betätigungsrichtung des Schalthebels wird folglich das Drehschaltglied und/oder das Schiebeschaltglied betätigt.

Vorteilhafterweise weist der Umlenkmechanismus ein um eine zum Leiterbahnenträger parallele Achse schwenkbares Fußteil, zur Anordnung des freien Endes des Schalthebels, und ein mit dem Fußteil einstückig ausgebildetes oder bewegungsgekoppeltes Umlenkglied auf, welches mit dem Schiebeschaltglied gekoppelt ist. Der Schalthebel kann hierbei entweder lösbar oder unlösbar oder einstückig mit dem Fußteil verbunden sein.

Vorteilhafterweise ist das Fußteil und/oder das Umlenkglied am Drehschaltglied um eine parallel zum Leiterbahnenträger verlaufende Achse schwenkbar gelagert angeordnet. Hierbei ist denkbar, dass sowohl das Fußteil als auch das Umlenkglied jeweils um eine Achse verschwenkbar gelagert ist, wobei die beiden Achsen parallel zueinander und parallel zum Leiterbahnenträger verlaufen.

Dabei ist denkbar, dass die Bewegungskopplung zwischen dem Fußteil und dem Umlenkglied eine Getriebekopplung ist. Die Getriebekopplung kann beispielsweise durch eine Hebelkopplung, eine Reibkopplung oder durch eine Verzahnung des Fußteiles mit dem Umlenkglied realisiert sein. Vorteilhafterweise ist die Getriebekopplung eine Untersetzung, wobei eine kleine Schwenkbewegung des Schalthebels in eine größere Schwenkbewegung des Umlenkgliedes untersetzt wird. Dies trägt zu größeren Verstellwegen des entsprechenden Schaltgliedes auf der entsprechenden Seite des Leiterbahnenträgers bei.

Vorteilhafterweise hinter-, um- oder durchgreift das Umlenkglied den Leiterbahnenträger, wobei das Schiebeschaltglied auf der anderen Seite des Leiterbahnenträgers als das Drehschaltglied angeordnet ist. Dabei kann insbesondere vorgesehen sein, dass der Leiterbahnenträger eine Aussparung für das den Leiterbahnenträger durchgreifende Umlenkglied aufweist. Die Aussparung ist dabei vorteilhafterweise so ausgebildet, dass das Umlenkglied beim Verschwenken des Schalthebels nicht in Berührkontakt mit dem Leiterbahnenträger kommt.

Eine weitere, besonders bevorzugte Ausführungsform der Erfindung zeichnet sich dadurch aus, dass das Fußteil als ein von dem Schalthebel separates Bauteil ausgebildet ist, wobei der dem Fußteil zugewandte Bereich des Schalthebels Kontaktstellen aufweist, die bei am Fußteil montierten Schalthebel von Kontaktelementen abgegriffen werden. Dies hat den Vorteil, dass über die Kontaktstellen beziehungsweise Kontaktelemente am freien Ende des Schalthebels vorhandene Schaltereinheiten mit Strom versorgt werden können. Bei bekannten Schalthebeln, die an ihrem freien Ende Schalteinheiten aufweisen, werden diese Schalteinheiten mittels eines Kabelsatzes, der beispielsweise den Schalthebel innerhalb des Gehäuses des Lenkstockschalters verlässt, mit entsprechenden Signalweiterleitungen, beziehungsweise mit einer entsprechenden Signalverarbeitung, verbunden. Vorteil der erfindungsgemäßen Ausführungsform ist, dass eine kabellose, elektrische Verbindung mittels den Kontaktelementen herstellbar ist. Dabei kann der Schalthebel als einzelne Baugruppe vormontiert werden und erst in der Endmontage in das Fußteil eingeschoben werden. Dies führt zu einer flexiblen und kostengünstigen Montage des Lenkstockschalters.

Bei einer Ausgestaltung der Erfindung ist vorgesehen, dass die Kontaktelemente gegenüber der Schwenkbewegung des Fußteils ortsfest angeordnet sind, wobei die dem Schalthebel zugewandten Enden der Kontaktelemente unter federnder Vorspannung die Kontaktstellen des Schalthebels beaufschlagen. Die Kontaktelemente sind hierbei vorteilhafterweise am Drehschaltglied befestigt.

Dabei können die dem Schalthebel abgewandten Enden der Kontaktelemente an der Oberseite des Leiterbahnenträgers vorhandene Schaltkontakte beaufschlagen. Die Kontaktelemente stellen hierbei elektrische Verbindungsmittel zwischen den Kontaktstellen des Schalthebels und den Schaltkontakten des Leiterbahnenträgers dar.

Eine weitere, vorteilhafte Ausführungsform der Erfindung ergibt sich dann, wenn die dem Schalthebel zugewandten Enden der Kontaktelemente lotrecht zum Leiterbahnenträger unterhalb der Schwenkachse des Fußteiles die Kontaktstellen beaufschlagen. Dies hat den Vorteil, dass sich die Lage der an den Kontaktstellen des Schalthebels anliegenden freien Enden der Kontaktelemente beim Verschwenken des Schalthebels um die parallel zum Leiterbahnenträger verlaufende Achse nur geringfügig ändert. Der Weg, um den die Enden der Kontaktfedern beim Verschwenken des Schalthebels nachgeführt werden müssen, ist sehr gering. Die federnde Vorspannung der Kontaktelemente kann folglich so ausgelegt werden, dass sie nur diesen, geringen Weg auszugleichen hat.
Vorteilhafterweise sind die dem Leiterbahnenträger zugewandten Enden der Kontaktelemente lotrecht zum Leiterbahnenträger unterhalb der Schwenkachse des Fußteiles angeordnet. Dies hat den Vorteil, dass die Kontaktelemente sehr klein und platzsparend ausgeführt werden können. Ferner können sie weitgehend symmetrisch ausgebildet sein, da die Ebene, die durch die dem Schalthebel zugewandten Enden und durch die dem Leiterbahnenträger zugewandten Enden der Kontaktelemente definiert wird, weitgehend senkrecht zu dem Leiterbahnenträger verläuft.

Eine weitere, ebenfalls bevorzugte Ausführungsform der Erfindung sieht vor, dass die Kontaktelemente an dem Drehschaltglied derart angeordnet sind, dass die dem Leiterbahnenträger zugewandten Enden der Kontaktelemente im Drehbereich der Drehachse des Drehschaltgliedes liegen, wobei die Lagerung des Drehschaltgliedes exzentrisch erfolgt. Die Anschlusskontakte sind folglich zentrisch angeordnet. Dies hat den Vorteil, dass beim Verschwenken des Schalthebels um die senkrecht zum Leiterbahnenträger verlaufende Schwenkachse die dem Leiterbahnenträger zugewandten Enden der Kontaktelemente einen minimalen Weg auf dem Leiterbahnenträger zurücklegen. Dadurch können die Anschlusskontakte für die dem Leiterbahnenträger zugewandten Enden der Kontaktelemente relativ klein gehalten werden. Dies führt wiederum zu einem relativ klein bauenden Leiterbahnenträger.

Vorteilhafterweise weist das Drehschaltglied in dem seiner Drehachse fern gelegenen Bereich Schaltkontakte auf. Aufgrund des relativ großen Abstandes zur Drehachse legen diese Schaltkontakte beim Verschwenken des Drehschaltgliedes um seine Achse einen relativ weiten Weg zurück. Die Schaltkontakte können hierbei je nach Stellung des Schalthebels beziehungsweise des Drehschaltgliedes verschiedene auf dem Leiterbahnenträger angeordnete Anschlusskontakte beaufschlagen.

Weitere Vorteile und vorteilhafte Einzelheiten der Erfindung sind der nachfolgenden Beschreibung zu entnehmen, in der die Erfindung anhand des in der Figur dargestellten Ausführungsbeispieles näher beschrieben und erläutert ist.

Es zeigen:
- Figur 1: eine Schalteinheit eines erfindungsgemäßen Lenkstockschalters in Seitenansicht;
- Figur 2: die Schalteinheit gemäß Figur 1 im Längsschnitt;
- Figur 3: die Schalteinheit gemäß Figur 1 und 2 in Explosionsdarstellung;

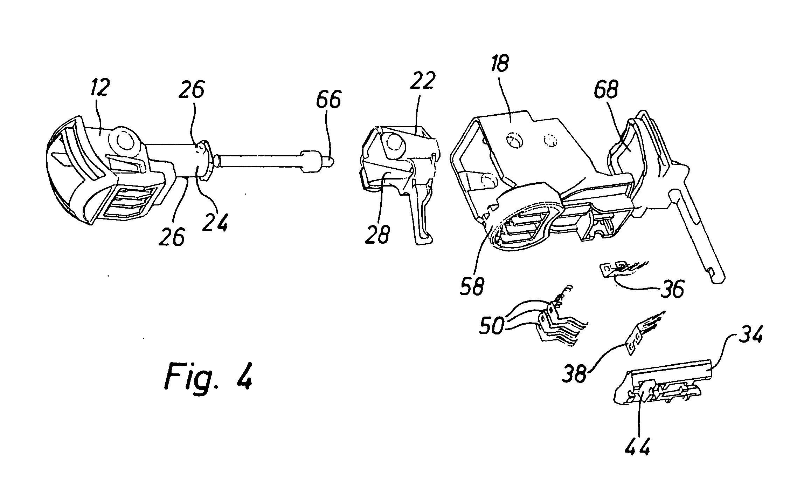

- Figur 4: die Schalteinheit gemäß Figur 3 in Ansicht von schräg unten; und

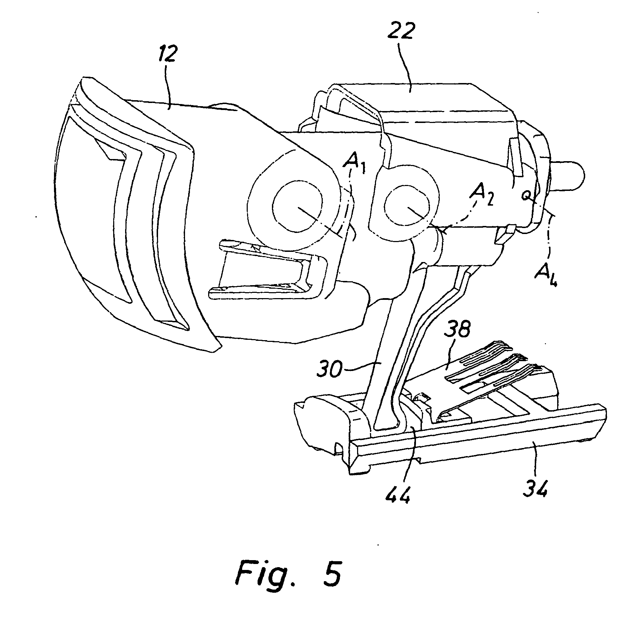

- Figur 5: Einzelteile der Schalteinheit gemäß Figur 4 in perspektivischer Ansicht.

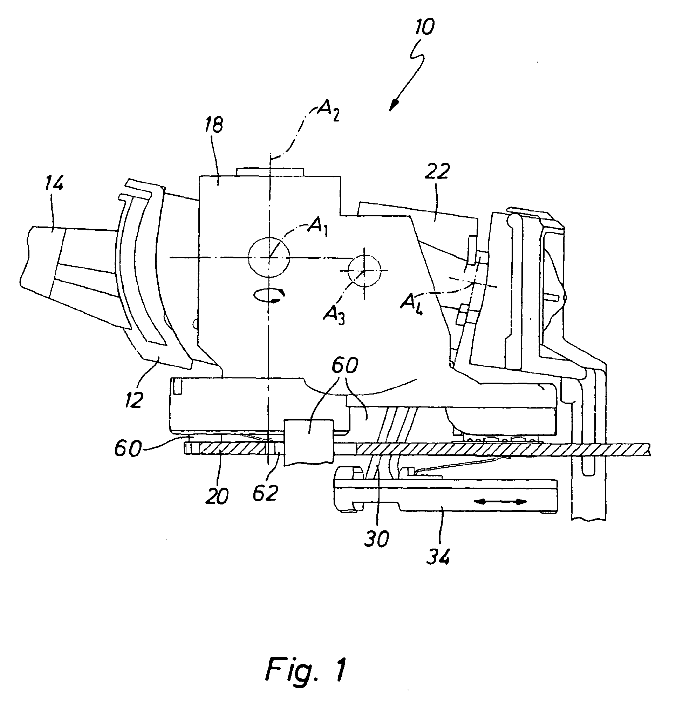

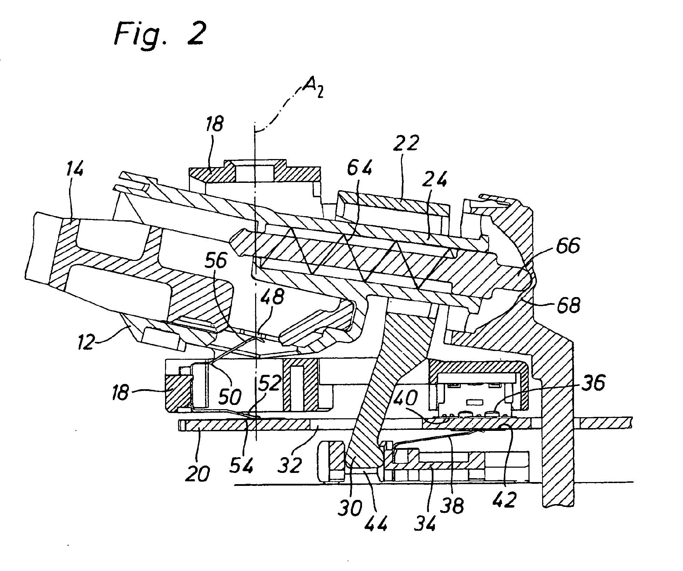

Die in den Figuren dargestellte Schalteinheit 10 eines Lenkstockschalters umfasst ein Fußteil 12 zur Aufnahme eines in den Figuren 1 und 2 abschnittsweise dargestellten Schalthebels 14. Der Schalthebel 14 ist in zwei quer, etwa senkrecht zueinander verlaufenden Schwenkebenen E1 und E2 schwenkbar gelagert, wobei die Ebene E₁ die Schnittebene der Figur 2 ist und die Ebene E₂ senkrecht zur Schnittebene gemäß Figur 2 verläuft. In der Ebene E₁ ist der Schalthebel 14 um die Achse A₁ schwenkbar gelagert. In der Ebene E₂ ist der Schwenkhebel 14 um die Achse A₂ schwenkbar gelagert. Bei der dargestellten Ausführungsform der Erfindung ist der Schalthebel 14 mit dem Fußteil 12 verrastbar ausgeführt. Erfindungsgemäß ist allerdings denkbar, dass der Schalthebel 14 mit dem Fußteil 12 auch einstückig ausgebildet sein kann.

Das Fußteil 12 ist über Lagerzapfen an einem Drehschaltglied 18 um die Achse A₁ schwenkbar angeordnet. Das Drehschaltglied 18 ist seinerseits auf einem Leiterbahnenträger 20 um die Achse A₂ schwenkbar angeordnet.

Ebenfalls an dem Drehschaltglied 18 ist um eine Achse A₃, die parallel zur Achse A₁ verläuft, ein Umlenkglied 22 schwenkbar gelagert angeordnet. Das Umlenkglied 22 ist hierbei mit dem Fußteil 12 über eine Getriebekopplung bewegungsgekoppelt. Das heißt, beim Verschwenken des Schalthebels 14, beziehungsweise des Fußteils 12, um die Achse A₁ wird das Umlenkglied 22 in einer vorgegebenen Getriebeübersetzung um die Achse A₃ verschwenkt. Die Getriebeübersetzung ist hierbei so gewählt, dass aus einer kleinen Bewegung des Schalthebels 14 eine große Bewegung des Umlenkgliedes 12 resultiert.

Zur Realisierung der Getriebeübersetzung weist das Fußteil 12 einen das Umlenkteil 22 weitgehend durchgreifenden Hebelabschnitt 24 auf, der zwei parallel zu den Achsen A₁ und A₃ verlaufende Getriebezapfen 26 aufweist. Die Getriebezapfen 26 ragen in zwei gegenüberliegende, an der Innenseite des Umlenkteils 22 vorgesehene Aufnahmenuten 28. Im montierten Zustand befinden sich die Getriebezapfen 26 vorzugsweise weitgehend spielfrei in den Aufnahmenuten 28, wobei dann die Getriebezapfen 26 auf der der Achse A₃ abgewandten Seite des Umlenkgliedes 22 in den Aufnahmenuten 28 angeordnet sind. In der Figur 1 ist die Achse der Getriebezapfen 26 mit dem Bezugszeichen A₄ angedeutet. Die Achsen A₁, A₃ und A₄ sind parallel zum Leiterbahnenträger 20 angeordnet. Die Achse A₂ verläuft senkrecht zum Leiterbahnenträger 20. Je nach Ausführungsform der Schalteinheit 10 kann allerdings das Fußteil 12 und das Umlenkglied 22 auch einstückig, ohne Getriebeübersetzung ausgebildet sein. Das Vorsehen einer Getriebeübersetzung, wie sie in den Figuren gezeigt und im Vorhergehenden beschrieben ist, hat den Vorteil, dass ein an dem Umlenkglied 22 vorhandener Umlenkhebel 30 beim Verschwenken des Schalthebels 14 um die Achse A₁ einen entsprechend weiteren Schaltweg zurücklegt.
Der Umlenkhebel 30 des Umlenkgliedes 22 durchgreift eine Aussparung 32 des Leiterbahnenträgers 20 und ist mit einem entlang einer Linie verschiebbar gelagerten Schiebeschaltglied 34 gekoppelt.

Sowohl das Drehschaltglied 18 als auch das Schiebeschaltglied 34 weisen Schaltkontakte 36 beziehungsweise 38 auf, die in Form von vorgespannten Schleifkontakten an auf dem Leiterbahnenträger 20 vorgesehenen Anschlusskontakten 40 beziehungsweise 42 anliegen.

Wie insbesondere aus den Figuren 1 und 2 deutlich wird, weist der eben ausgebildete Leiterbahnenträger 20 auf seiner dem Drehschaltglied 18 beziehungsweise dem Schalthebel 14 zugewandten Oberseite Anschlusskontakte 40 und auf seiner dem Schiebeschaltglied 34 zugewandten Unterseite Anschlusskontakte 42 auf. Die für ein Verschwenken des Schalthebels 14 um die Achse A₂ relevanten Anschlusskontakte 40 sind auf der Oberseite des Leiterbahnenträgers 20 angeordnet. Die für ein Verschwenken des Schalthebels 14 um die Achse A₁ relevanten Anschlusskontakte 42 sind auf der Unterseite des Leiterbahnenträgers 20 angeordnet. Dadurch, dass der Leiterbahnenträger zum einen auf seiner Oberseite und zum anderen auf seiner Unterseite Anschlusskontakte 40, 42 aufweist, kann der Leiterbahnenträger 20 sehr klein ausgeführt werden beziehungsweise wird für die Anschlusskontakte 40, 42 sehr wenig Bauraum beansprucht. Bei einer Ausbildung der Erfindung, wie sie in den Figuren gezeigt ist, liegen die auf der Oberseite des Leiterbahnenträgers 20 vorgesehenen Anschlusskontakte 40 den auf der Unterseite vorgesehenen Anschlusskontakten 42 gegenüber. Hierdurch wird minimaler Bauraum für das Vorsehen der Anschlusskontakte 40, 42 beansprucht.

Die Aussparung 22 ist hierbei so ausgelegt, dass beim Verschwenken des Drehschaltgliedes 18 um die Achse A₂ der Umlenkhebel 30 nicht in Berührkontakt mit dem Leiterbahnenträger 20 kommt. Das freie Ende des Umlenkhebels 30 ist in einer Aufnahmenut 44 des Schiebeschaltgliedes 34 derart gelagert, dass ein Verschwenken des Umlenkgliedes 22, beziehungsweise des Umlenkhebels 30, um die Achse A₂ möglich ist, ohne dass das freie Ende des Umlenkhebels 30 an den Stirnseiten 46 der Aufnahmenut 44 zum Anschlag kommt.

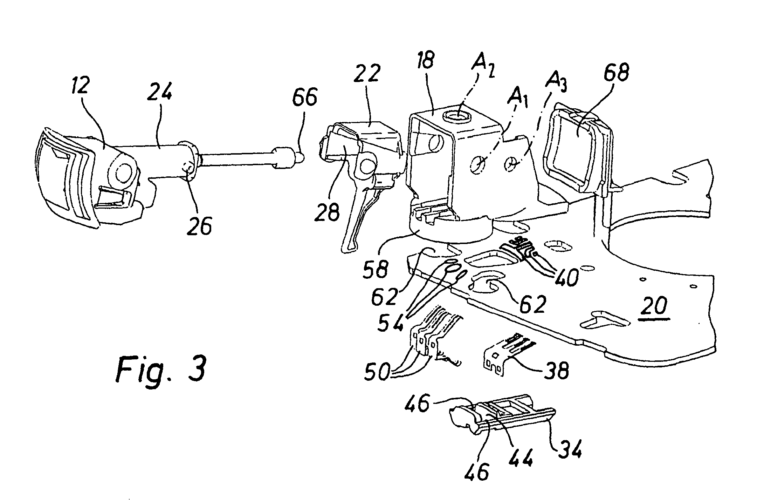

Wie aus Figur 2 deutlich wird, weist der dem Fußteil 12 zugewandte Bereich des Schalthebels 14 Kontaktstellen 48 auf, die von Kontaktelementen 50 in Form von vorgespannten Federkontakten abgegriffen werden. Über die Kontaktelemente 50 werden beispielsweise am freien Ende des Schalthebels 14 vorgesehene Schalteinheiten mit Strom versorgt, wobei an den Kontaktstellen 48 und 54 beim Betätigen des Schalthebels 14 vorteilhafterweise keine Schaltvorgänge stattfinden. Die Kontaktelemente 50 sind am Drehschaltglied 18, und damit gegenüber der Schwenkbewegung des Fußteils 12 beziehungsweise des Schalthebels 14 um die Achse A₁, ortsfest angeordnet. Die dem Schalthebel 14 abgewandten Enden 52 der Kontaktelemente 50 beaufschlagen unter federnder Vorspannung Kontaktstellen 54 des Leiterbahnenträgers 20. Dabei sind die dem Schalthebel 14 zugewandten freien Enden 56 lotrecht zum Leiterbahnenträger 20 unterhalb der Schwenkachse A₁ angeordnet. Außerdem sind die dem Leiterbahnenträger 20 zugewandten Enden 52 der Kontaktelemente 50 lotrecht zum Leiterbahnenträger 20 unterhalb der Schwenkachse A₁ angeordnet. Ferner liegen die freien Enden 52 der Kontaktelemente 50 im Bereich der Drehachse A₂ des Drehschaltgliedes 18. Dabei erfolgt die Lagerung des Drehschaltgliedes 18 exzentrisch. Das Drehschaltglied 18 weist auf seiner dem Leiterbahnenträger 20 zugewandten Seite hierfür einen Ringabschnitt 58 auf, der mittels an dem Leiterbahnenträger 20 vorgesehenen Führungsstegen 60, insbesondere in Form von Ringabschnitten, in seiner radialen Lage weitgehend spielfrei gehalten wird. Die Führungsstege 60 können hierbei beispielsweise an dem Leiterbahnenträger 20 angeordnet sein, oder an einem den Leiterbahnenträger 20 durchgreifenden Gehäuseabschnitt des Lenkstockschalters. In der Figur 1 sind die Führungsstege 60 angedeutet. In der Figur 3 durchgreifen die Führungsstege 60 am Leiterbahnenträger 20 vorgesehene Aussparungen 62.

Dadurch, dass zum einen die dem Schalthebel 14 zugewandten freien Enden 56 und die dem Leiterbahnenträger 20 zugewandten freien Enden 52 der Kontaktelemente 50 lotrecht zum Leiterbahnenträger 20 unterhalb der Schwenkachse A₁ liegen, wird vorteilhafterweise erreicht, dass einerseits beim Verschwenken des Schalthebels 14 um die Achse A₁ lediglich eine relativ geringe Bewegung der Kontaktstellen 48 durch die freien, vorgespannten Enden 56 der Kontaktstellen ausgeglichen werden muss, und andererseits beim Verschwenken des Schalthebels 14 um die Achse A₂ die freien Enden 52 der Kontaktelemente 50 einen sehr geringen Weg gegenüber den Kontaktstellen 54 zurücklegen.

Die Schaltkontakte 36, die beim Schwenken des Schalthebels 14 um die Achse A₂ je nach Arbeitstellung des Schalthebels 14 verschiedene Anschlusskontakte kontaktieren, liegen fern von der Achse A₂. Hierdurch legen die Schaltkontakte 36 beim Verschwenken des Schalthebels 14 um die Achse A₂ einen relativ großen Weg zurück. Wie bereits erwähnt, legen die Schaltkontakte 38 des Schiebeschaltglieds 34 aufgrund der Getriebekopplung zwischen dem Fußteil 12 und dem Umlenkglied 22 beim Verschwenken des Schalthebels 14 um die Achse A₁ ebenfalls einen relativ weiten Weg zurück. Je nach Arbeitstellung des Schalthebels 14 werden entsprechende Anschlusskontakte 40, 42 miteinander über die Schaltkontakte 36, 38 verbunden.

Um den Schalthebel 14 in definierten, vorgegebenen Arbeitstellungen zu halten, ist eine mit einer Feder 64 vorgespannte Nocke 66 vorgesehen, die eine gehäuseseitige Schaltkulisse 68 beaufschlagt.

## Patentansprüche

1. Lenkstockschalter für ein Fahrzeug, mit einer Schalteinheit (10), deren um zwei quer, insbesondere etwa senkrecht zueinander verlaufende Drehachsen (A₁, A₂) schwenkbar gelagerter Schalthebel (14) mit Schaltkontakte (36, 38) aufweisenden Schaltgliedern (18, 34) derart gekoppelt ist, dass die Schaltkontakte (36, 38) je nach Arbeitstellung des Schalthebels (14) Anschlusskontakte (40, 42) auf der Oberseite und der Unterseite eines eben ausgebildeten Leiterbahnenträgers (20) entsprechend kontaktieren, **dadurch gekennzeichnet, dass** auf der Oberseite des Leiterbahnenträgers (20) ein um die senkrecht zum Leiterbahnenträger (20) verlaufende Drehachse (A₂)des Schalthebels (14) drehbar angeordnetes Drehschaltglied (18) vorgesehen ist, wobei am Drehschaltglied (18) der Schalthebel um die andere, parallel zum Leiterbahnträger verlaufende Drehachse (A₁) schwenkbar angeordnet ist und dass auf der Unterseite des Leiterbahnenträgers (20) ein Schiebeschaltglied (34) vorgesehen ist, das über ein am Drehschaltglied gelagertes Umlenkglied eines Umlenkmechanismus (22, 30) mit dem Schalthebel (14) derart gekoppelt ist, dass durch Bewegen des Schalthebels (14) um die parallel zum Leiterbahnenträger (20) verlaufende Drehachse (A₁) das Schiebeschaltglied (34) entlang einer Linie am Leiterbahnenträger (20) verschoben wird.

2. Lenkstockschalter nach Anspruch 1, **dadurch gekennzeichnet, dass** der Umlenkmechanismus ein um eine zum Leiterbahnenträger (20) parallele Achse (A₁) schwenkbares Fußteil (12) zur Anordnung des dem Fußteil (12) zugewandten Endes des Schalthebels (14) aufweist, wobei das mit dem Schiebeschaltglied (34) gekoppelte Umlenkglied (22) mit dem Fußteil (12) einstückig ausgebildet oder bewegungsgekoppelt ist.

3. Lenkstockschalter nach Anspruch 2, **dadurch gekennzeichnet, dass** das Fußteil (12) und das Umlenkglied (22) am Drehschaltglied (18) um eine parallel zum Leiterbahnenträger (20) verlaufende Achse (A₁, A₃) schwenkbar gelagert angeordnet ist.

4. Lenkstockschalter nach Anspruch 2 oder 3, **dadurch gekennzeichnet, dass** die Bewegungskopplung zwischen dem Fußteil (12) und dem Umlenkglied (22) eine Getriebekopplung ist.

5. Lenkstockschalter nach Anspruch 2, 3 oder 4, **dadurch gekennzeichnet, dass** das Umlenkglied (22) den Leiterbahnenträger (20) hinter-, um- oder durchgreift und dass das Schiebeschaltglied (34) auf der anderen Seite des Leiterbahnenträgers (20) als das Drehschaltglied (18) angeordnet ist.

6. Lenkstockschalter nach einem der Ansprüche 2 bis 5, **dadurch gekennzeichnet, dass** das Fußteil (12) als ein von dem Schalthebel (14) separates Bauteil ausgebildet ist, wobei der dem Fußteil (12) zugewandte Bereich des Schalthebels (14) Kontaktstellen (48) aufweist, die bei am Fußteil (12) montierten Schalthebel (14) von Kontaktelementen (50) abgegriffen werden.

7. Lenkstockschalter nach Anspruch 6, **dadurch gekennzeichnet, dass** die Kontaktelemente (50) gegenüber der Schwenkbewegungen des Fußteils (12) um die Achse (A₁) ortsfest angeordnet sind, wobei die dem Schalthebel (14) zugewandten Enden (56) der Kontaktelemente (50) unter federnder Vorspannung der Schwenkbewegung der Kontaktstellen (48) des Schalthebels (14) folgen und diese beaufschlagen.

8. Lenkstockschalter nach Anspruch 6 oder 7, **dadurch gekennzeichnet, dass** die dem Schalthebel (14) abgewandten Enden (52) der Kontaktelemente (50) an der Oberseite des Leiterbahnenträgers (20) vorhandene Schaltkontakte (54) beaufschlagen.

9. Lenkstockschalter nach Anspruch 6, 7 oder 8, **dadurch gekennzeichnet, dass** die dem Schalthebel (14) zugewandten Enden (56) der Kontaktelemente (50) die Kontaktstellen (48) in etwa lotrecht zum Leiterbahnenträger (20) in etwa unterhalb der Schwenkachse (A₁) des Fußteiles (12) beaufschlagen.

10. Lenkstockschalter nach einem der Ansprüche 8 bis 9, **dadurch gekennzeichnet, dass** die den Leiterbahnenträger (20) kontaktierenden Enden (52) der Kontaktelemente (50) in etwa lotrecht zum Leiterbahnenträger (20) unterhalb der Schwenkachse (A₁) des Fußteiles (12) angeordnet sind.

11. Lenkstockschalter nach einem der Ansprüche 6 bis 10, **dadurch gekennzeichnet, dass** die Kontaktelemente (50) an dem Drehschaltglied (18) derart angeordnet sind, dass die dem Leiterbahnenträger (20) zugewandten Enden (52) der Kontaktelemente (50) im Bereich der Drehachse (A₂) des Drehschaltglieds (18) liegen.

12. Lenkstockschalter nach einem der vorhergehenden Ansprüche, **dadurch gekennzeichnet, dass** das Drehschaltglied (18) in dem der Drehachse (A₂) fern gelegenen Bereich Schaltkontakte (36) aufweist.

## Claims

1. Steering column switch for a vehicle comprising a switching unit (10) whose switch lever (14) which is mounted pivotable about two rotation axes (A₁, A₂) running transversely, and in particular approximately perpendicularly, to one another is coupled to switch members (18, 34) having switching contacts (36, 38) such that, depending on the working position of the switch lever (14), the switching contacts (36, 38) make contact accordingly with connection contacts (40, 42) on the upper side and the underside of a conducting track support (20) of planar construction, **characterised in that** a rotary switch member (18) arranged rotatable about the rotation axis (A₂) of the switch lever (14), said rotation axis being arranged perpendicularly to the conducting track support (20), is provided on the upper side of the conducting track support (20), wherein the switch lever is arranged on the rotary switch member (18) rotatable about the other rotation axis (A₁) which runs parallel to the conducting track support and that on the underside of the conducting track support (20) a sliding switch member (34) is provided which is coupled, via a deflecting member of a deflecting mechanism (22, 30) mounted on the rotary switch member, to the switch lever (14) such that by moving the switch lever (14) about the rotation axis (A₁) running parallel to the conducting track support (20), the sliding switch member (34) is pushed along a line on the conducting track support (20) .

2. Steering column switch according to claim 1, **characterised in that** the deflecting mechanism comprises a foot member (12) pivotable about an axis (A₁) parallel to the conducting track support (20) for arranging the end of the switch lever (14) facing towards the foot member (12), wherein the deflecting member (22) coupled to the sliding switch member (34) is formed in one piece with the foot member (12) or has its movement coupled to said foot member.

3. Steering column switch according to claim 2, **characterised in that** the foot member (12) and the deflecting member (22) is arranged on the rotary switch member (18) mounted pivotable about an axis (A₁, A₃) which runs parallel to the conducting track support (20).

4. Steering column switch according to claim 2 or 3, **characterised in that** the movement coupling between the foot member (12) and the deflecting member (22) is a gearing coupling.

5. Steering column switch according to claim 2, 3 or 4, **characterised in that** the deflecting member (22) engages behind, grasps or penetrates the conducting track support (20) and that the sliding switch member (34) is arranged on the other side of the conducting track support (20) from the rotary switch member (18).

6. Steering column switch according to one of the claims 2 to 5, **characterised in that** the foot member (12) is configured as a separate component from the switch lever (14), wherein the region of the switch lever (14) facing towards the foot member (12) has contact sites (48) which, with the switch lever (14) mounted on the foot member (12), are contacted by contact elements (50).

7. Steering column switch according to claim 6, **characterised in that** the contact elements (50) are arranged locally fixed relative to the pivot movements of the foot member (12) about the axis (A₁), wherein the ends (56) of the contact elements (50) facing towards the switch lever (14) follow the pivot movements of the contact sites (48) under spring-loaded pre-tension and impinge upon them.

8. Steering column switch according to claim 6 or 7, **characterised in that** the ends (52) of the contact elements (50) facing away from the switch lever (14) impinge upon switching contacts (54) present on the upper side of the conducting track support (20).

9. Steering column switch according to claims 6, 7 or 8, **characterised in that** the ends (56) of the contact elements (50) facing towards the switch lever (14) impinge upon the contact sites (48) approximately perpendicularly to the conducting track support (20) approximately beneath the pivot axis (A₁) of the foot member (12).

10. Steering column switch according to one of the claims 8 to 9, **characterised in that** the ends (52) of the contact elements (50) contacting the conducting track support (20) are arranged approximately perpendicularly to the conducting track support (20) beneath the pivot axis (A₁) of the foot member (12).

11. Steering column switch according to one of the claims 6 to 10, **characterised in that** the contact elements (50) are arranged on the rotary switch member (18) such that the ends (52) of the contact elements (50) facing towards the conducting track support (20) lie in the region of the rotation axis (A₂) of the rotary switch member (18).

12. Steering column switch according to one of the preceding claims, **characterised in that** the rotary switch member (18) has switching contacts (36) in the region remote from the rotation axis (A₂).

## Revendications

1. Commutateur de colonne de direction pour véhicule automobile, avec une unité de commutation (10) dont le levier de commande (14), monté de manière pivotante, autour de deux axes de rotation (A₁, A₂) s'étendant transversalement, en particulier perpendiculairement l'un à l'autre, avec des éléments de contact (18, 34) comportant des contacts (36, 38), couplé de manière à ce que les contacts (36, 38) mettent en contact les contacts de commutation (40, 42) de la face supérieure et de la face inférieure d'un support de piste conductrice (20) venant d'être réalisé, en fonction de la position de travail du levier de vitesses (14) **caractérisé en ce que** sur la face supérieure du support de la piste conductrice (20) est prévu un élément de contact rotatif (18), disposé de manière rotative autour d'un axe de rotation (A₂) s'étendant perpendiculairement au support de la piste conductrice (20), sur l'élément de contact rotatif (18) étant logé le levier de commande (14) de manière pivotante autour de l'autre axe de rotation (A₁), s'étendant parallèlement au support de la piste conductrice, et **en ce que** sur la face inférieure du support de la piste conductrice (20) est prévu un élément de contact coulissant (34) qui est couplé au levier de commande (14) par un mécanisme de renvoi (22, 30) monté sur l'élément de contact rotatif de telle façon que grâce au mouvement du levier de commande (14) autour de l'axe de rotation (A₁) s'étendant parallèlement au support de la piste conductrice (20), l'élément de contact coulissant (34) se déplace le long d'une ligne sur le support de la piste conductrice (20).

2. Commutateur de colonne de direction selon la revendication 1, **caractérisé en ce que** le mécanisme de renvoi comporte une partie socle (12), pivotant autour d'un axe parallèle (A₁) au support de la piste conductrice (20), afin d'agencer l'extrémité libre du levier de commande (14) tournée vers la partie socle (12), l'organe de renvoi (22) associé à l'élément de contact coulissant (34) étant conçu d'un seul tenant ou couplé en mouvement avec la partie socle (12).

3. Commutateur de colonne de direction selon la revendication 2, **caractérisé en ce que** la partie socle (12) et l'organe de renvoi (22) sont disposés de manière pivotante sur l'élément de contact rotatif (18) autour d'un axe (A₁, A₃) s'étendant parallèlement au support de la piste conductrice (20).

4. Commutateur de colonne de direction selon l'une quelconque des revendications 2 ou 3, **caractérisé en ce que** le couplage en mouvement entre la partie socle (12) et l'organe de renvoi (22) est un couplage à engrenage.

5. Commutateur de colonne de direction selon l'une quelconque des revendications 2, 3 ou 4, **caractérisé en ce que** l'organe de renvoi (22) s'engage derrière, autour ou à travers le support de la piste conductrice (20) et **en ce que** l'élément de contact coulissant (34) est disposé sur l'autre face du support de la piste conductrice (20) en tant qu'élément de contact rotatif (18).

6. Commutateur de colonne de direction selon l'une quelconque des revendications 2 à 5, **caractérisé en ce que** la partie socle (12) est conçue comme un composant séparé du levier de commande (14), la zone du levier de commande (14) tournée vers la partie socle (12) présentant des points de contact (48) qui sont connectés par des éléments de contact (50) lorsque le levier de commande (14) est monté sur la partie socle (12).

7. Commutateur de colonne de direction selon la revendication 6, **caractérisé en ce que** les éléments de contact (50) sont disposés en position fixe par rapport aux mouvements de pivotement de la partie socle (12) autour de l'axe (A₁), les extrémités (56), tournées vers le levier de commande (14), des éléments de contact (50) suivent le mouvement de pivotement des points de contact (48) du levier de commande (14) sous précontrainte à effet ressort et pressent ceux-ci.

8. Commutateur de colonne de direction selon l'une quelconque des revendications 6 ou 7, **caractérisé en ce que** les extrémités (52) des éléments de contact (50) opposées au levier de commande (14) pressent les contacts (54) présents sur la face supérieure du support de la piste conductrice (20).

9. Commutateur de colonne de direction selon l'une quelconque des revendications 6, 7 ou 8, **caractérisé en ce que** les extrémités (56) des éléments de contact (50) tournées vers le levier de commande (14) pressent les points de contact (48) sensiblement verticalement par rapport au support de la piste conductrice (20), en dessous de l'axe de pivotement (A₁) de la partie socle (12).

10. Commutateur de colonne de direction selon l'une quelconque des revendications 8 à 9, **caractérisé en ce que** les extrémités (52) des éléments de contact (50) mettant en contact le support de la piste conductrice (20) sont disposées sensiblement à la verticale du support de la piste conductrice (20), en dessous de l'axe de pivotement (A₁) de la partie socle (12).

11. Commutateur de colonne de direction selon l'une quelconque des revendications 6 à 10, **caractérisé en ce que** les éléments de contacts (50) sont disposés sur l'élément de contact rotatif (18) de telle sorte que les extrémités (52) tournées vers le support de la piste conductrice (20) se trouvent dans la zone de l'axe de rotation (A₂) de l'élément de contact rotatif (18).

12. Commutateur de colonne de direction selon l'une quelconque des précédentes revendications, **caractérisé en ce que** l'élément de contact rotatif (18) comporte des contacts de connexion (36) dans la zone éloignée de l'axe de rotation (A₂).
